# EUROPÄISCHE PATENTANMELDUNG

(11) **EP 0 807 565 A2**
(43) Veröffentlichungstag der Anmeldung: **19.11.1997**
(21) Anmeldenummer: 97107555.1
(22) Anmeldetag: 07.05.1997
(51) Int. Cl.: B62D 25/04, B62D 29/00

(54) **Rahmenelement für Fahrzeug-Karosserien**

(30) Priorität: 17.05.1996 DE 19619936
(71) Anmelder: Bayerische Motoren Werke Aktiengesellschaft, 80788 München (DE); Norsk Hydro ASA, 0240 Oslo 2 (NO)
(72) Erfinder: Brunner, Peter, 85229 Markt Indersdorf (DE); Clausen, Edvin List, 6270 Toender (DK); Lechermann, Gunther, 85120 Hepberg (DE); Ruch, Wolfgang W., Dr., 92420 Vaucresson (FR)
(74) Vertreter: Dexheimer, Rolf

(57) **Zusammenfassung**

Das Rahmenelement (1) ist aus einem Strangpreßprofil gefertigt, das mehrere Kammern (5, 6) aufweist.

Damit beim Abtrennen einer Kammer (6) die unter Umständen scharfkantigen äußeren Kanten (8) der Schnittfläche (7) auch ohne Nachbearbeitung nicht zu Verletzungen oder ähnlichem führen, ist die äußere Kante (8) der Schnittfläche (7) gegenüber der angrenzenden Profil-Außenfläche (9 bzw. 9') zurückgesetzt.

## Beschreibung

Die Erfindung bezieht sich auf ein Rahmenelement für Fahrzeug-Karosserien nach dem Oberbegriff des Patentanspruches 1.

In der DE 41 39 303 A1 ist eine Mittelsäule eines Personenkraftwagens beschrieben, die aus einem Strangpreßprofil gefertigt wird. Eine solche Säule braucht oben einen wesentlich geringeren Profilquerschnitt als in ihrem unteren Bereich. Erreicht wird dies dadurch, daß im oberen Bereich größere Abschnitte des Profilquerschnitts des mehrkammerigen Strangpreßprofils weggetrennt werden. Dabei können sehr scharfkantige Kanten entstehen, die zur Verminderung der Verletzungsgefahr nachgearbeitet, beispielsweise gebrochen oder entgratet werden müssen.

Der Erfindung liegt die Aufgabe zugrunde, ein Rahmenelement für Fahrzeug-Karosserien der vorausgesetzten Bauart zu schaffen, bei dem die eben geschilderte Nachbearbeitung nicht mehr erforderlich ist.

Diese Aufgabe wird durch die im Patentanspruch 1 beschriebenen Maßnahmen gelöst. Dank dieser Maßnahmen befindet sich die äußere Kante der Schnittfläche nach Abtrennung des nicht benötigten Profilquerschnittsbereichs nicht im unmittelbaren Kantenbereich des Restprofils. Die Gefahr von Schnitt- oder Schürfverletzungen ist dadurch auch ohne zusätzliche Nachbearbeitung der Schnittkante vermieden.

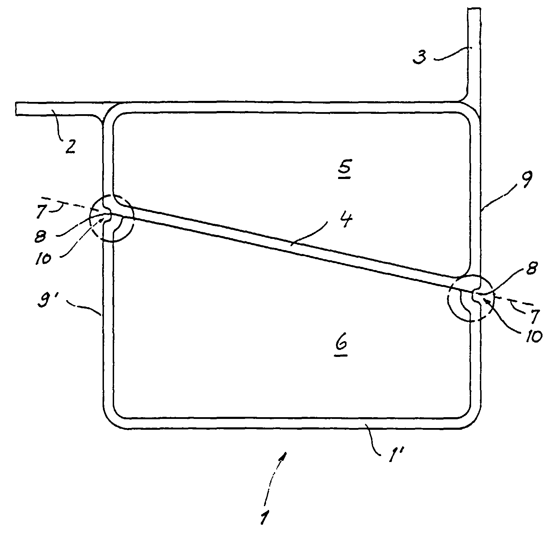

Die Erfindung ist im folgenden anhand eines in der Zeichnung dargestellten Ausführungsbeispiels näher erläutert. Die einzige Figur der Zeichnung zeigt den Querschnitt durch ein Zweikammerprofil eines Rahmenelementes für Fahrzeug-Karosserien.

Der in der Zeichnung wiedergegebene Querschnitt des Rahmenelementes 1 hat eine im wesentlichen rechteckige Grundform mit an zwei Ecken abstehenden Flanschen 2 und 3. Durch eine schräg verlaufende Trennwand werden zwei Kammern 5 und 6 gebildet.

In Bereichen des Rahmenelementes 1, in denen beispielsweise eine verminderte Steifigkeit gefordert wird, kann der - bis auf die Trennwand 4 - die Kammer 6 umschließende Querschnittsteil 1' abgetrennt werden. Die äußere Kante 8 der Schnittfläche ist dabei gegenüber der angrenzenden Profil-Außenfläche 9 bzw. 9' zurückgesetzt. Bei dem dargestellten Ausführungsbeispiel geschieht dies in der Weise, daß die Kante außen im Grund einer Nut 10 verläuft, die in der Profil-Außenfläche 9 bzw. 9' vorgesehen ist.

Wie man erkennt, ist die Nut 10 im Übergangsbereich der Trennwand 4 zu den Außenflächen 9 bzw. 9' des mehrkammerigen Strangpreßprofils ausgebildet.

## Patentansprüche

1. Rahmenelement für Fahrzeug-Karosserien, im wesentlichen bestehend aus einem Strangpreßprofil, das abschnittsweise zur Veränderung des Profilquerschnitts beschnitten ist,
dadurch gekennzeichnet, daß die äußere Kante (8) der Schnittfläche (7) gegenüber der angrenzenden Profil-Außenfläche (9, 9') zurückgesetzt ist.

2. Rahmenelement nach Anspruch 1,
dadurch gekennzeichnet, daß die Kante (8) außen im Grund einer Nut (10) verläuft, die in der Profil-Außenfläche (9, 9') vorgesehen ist.

3. Rahmenelement nach Anspruch 2,
dadurch gekennzeichnet, daß die Nut (10) im Übergangsbereich einer Trennwand (4) zu den Außenflächen (9, 9') eines mehrkammerigen Strangpreßprofils ausgebildet ist.
